# EUROPEAN PATENT SPECIFICATION

(11) **EP 3 067 196 B1**
(45) Date of publication and mention of the grant of the patent: **09.12.2020**
(21) Application number: 14847446.3
(22) Date of filing: 30.09.2014
(51) Int. Cl.: B32B 5/26, B01D 39/16, D04H 1/4382, D04H 1/542, D04H 1/559, D04H 1/728

(54) **FIBROUS LAMINATE CONTAINING ULTRAFINE FIBERS AND FILTER COMPRISING SAME**
FASERLAMINAT MIT ULTRAFEINEN FASERN UND FILTER DAMIT
STRATIFIÉ FIBREUX CONTENANT DES FIBRES ULTRAFINES ET FILTRE LE COMPRENANT

(30) Priority: 30.09.2013 JP 2013203856
(43) Date of publication of application: 14.09.2016
(73) Proprietor: JNC Corporation, Chiyoda-ku Tokyo 100-8105 (JP); JNC Fibers Corporation, Tokyo 100-0004 (JP)
(72) Inventor: MIYAUCHI Minoru, Moriyama-shi Shiga 524-0001 (JP); UMEBAYASHI You, Moriyama-shi Shiga 524-0001 (JP)
(74) Representative: Becker & Kurig Partnerschaft Patentanwälte PartmbB
(86) International application number: PCT/JP2014/076049
(87) International publication number: WO 2015/046564

(56) References cited:
- WO-A1-2009/050864
- JP-A- 2005 218 909
- JP-A- 2007 170 224
- JP-A- 2009 275 312
- US-A1- 2008 314 011
- US-A1- 2010 206 803

## Description

### Technical Field

The present invention relates to a fiber-lamination nonwoven fabric and a filter using the same. More specifically, the invention relates to a fibrous laminate in which a fibrous layer composed of ultrafine fibers and a fibrous layer composed of thermo-fusible conjugate fibers are laminated and united, and a filter formed of the same.

### Background Art

In recent years, ultrafine fibers having a diameter of tens to hundreds of nanometers (nm) have been expected in an application and attracted attention in various fields such as a medical field for a cell culture base material and a wound covering material, an electronics field for an electron gun for a light emitter and various sensors, and an environment-friendly field for a high performance filter.

As a method of producing the ultrafine fibers, such a method is known as a method of dissolving and removing a sea component of sea-island fibers obtained by sea-island conjugate spinning or polymer blend spinning, a melt-blown method, a force spinning method in which fining of a discharged fibrous material is achieved by centrifugal force of a rotating spinneret and an electric field spinning method. The ultrafine fibers obtained by such a production method are ordinarily accumulated and formed into a fibrous aggregate, and then are utilized in the form of a nonwoven fabric or the like.

The nonwoven fabric composed of such ultrafine fibers has a small fiber diameter, and therefore has low mechanical strength per one fiber to cause a problem of single fiber breakage or rupture only by touching of the nonwoven fabric with an apparatus for processing into a product, and has low rigidity of the nonwoven fabric to cause a problem of reducing processability, for example.

In order to solve such problems, a proposal has been made on a method in which a fibrous layer (hereinafter, occasionally referred to as a layer of ultrafine fibers) composed of ultrafine fibers is used in the form of a fibrous laminate prepared by laminating and uniting the fibrous layer with a reinforcing material having excellent strength and rigidity (for example, see Patent literature No. 1). However, interlayer peeling strength of the obtained fibrous laminate is insufficient, and thus peeling is caused between the fibrous layer and the reinforcing material in a pleating step upon processing the fibrous laminate into a pleated filter, in which the laminate has a problem of reducing operability and processability, for example.

In order to solve such problems, proposals have been made on strengthening adhesion between a layer of ultrafine fibers and a nonwoven fabric to be used as a reinforcing material, such as (1) a method of uniting both by using a hot-melt agent (for example, see Patent literature No. 2), (2) a method of uniting both by using an organic solvent-soluble adhesive (for example, see Patent literature No. 3), and (3) a method of uniting both by thermocompression bonding using an embossing roll (for example, see Patent literature No. 4).

However, when the layer of ultrafine fibers and the nonwoven fabric are united by using the hot-melt agent or the organic solvent-soluble adhesive, an adhesive component is infiltrated into the layer of ultrafine fibers, in which the laminate has a problem of reducing porosity of the layer of ultrafine fibers. Moreover, when the layer of ultrafine fibers and the nonwoven fabric are united by thermocompression bonding using the embossing roll, the layer of ultrafine fibers and the nonwoven fabric in an embossed part are formed into a film, in which the laminate has a problem of retaining no fiber form. Thus, according to the fibrous laminate obtained by a conventional laminating and uniting method, sufficient development of characteristics original to the ultrafine fibers has been unattainable.

### Citation List

### Patent Literature

Patent literature No. 1: JP 2009-233550 A.
Patent literature No. 2: JP 2007-030175 A.
Patent literature No. 3: JP 2010-030289 A.
Patent literature No. 4: JP 2009-263806 A.

US 2010/206803 A1 discloses a multi-layer, fluid transmissive structure that comprises first and second fiber layers each comprising a plurality of polymeric fibers bonded to each other at spaced apart contact points. The polymeric fibers of these fiber layers have diameters greater than one micron and collectively define interconnected interstitial spaces providing tortuous fluid flow paths through the first and second fiber layers. The structure also comprises a plurality of nanofibers disposed intermediate at least a portion of the first fiber layer and at least a portion of the second fiber layer.

US 2008/314011 A1 discloses a filter element including a first end cap, a second end cap, and a composite filter media structure. The composite filter media structure includes a base substrate that includes a nonwoven synthetic fabric formed from a plurality of bicomponent synthetic fibers with a spunbond process, and having a bond area pattern having a plurality of substantially parallel discontinuous lines of bond area.

### Summary of Invention

### Technical Problem

Consequently, the invention is contemplated for providing a fibrous laminate having excellent secondary processability in processing into a filter or the like by laminating a fibrous layer composed of ultrafine fibers with another fibrous layer and strongly adhering and uniting each interlayer while reduction of characteristics of the ultrafine fibers is suppressed at a minimum to compensate insufficiency of mechanical strength and rigidity of a layer of ultrafine fibers.

### Solution to Problem

The present inventors have diligently continued to conduct research for solving the problems described above. As a result, the present inventors have found that a fibrous laminate obtained by laminating a fibrous layer composed of ultrafine fibers with a fibrous layer composed of thermo-fusible conjugate fibers, and adhering both interlayers by bonding of the thermo-fusible conjugate fibers has excellent mechanical strength and rigidity, and excellent processability into a filter or the like, for example, and thus have completed the invention.

The present invention is provided by appended claim 1. Beneficial embodiments are provided in the dependent claims. The following disclosure serves a better understanding of the invention.

Item 1. A fibrous laminate, including a fibrous layer I composed of ultrafine fibers having a mean fiber diameter of 10 to 1,000 nanometers, and a fibrous layer II composed of thermo-fusible conjugate fibers having a mean fiber diameter of 5 to 100 micrometers, wherein contact points between the ultrafine fibers and the thermo-fusible conjugate fibers are bonded by melting of the thermo-fusible conjugate fibers composing the fibrous layer II, and the fibrous layer I and the fibrous layer II are laminated and united by the formed bonding points.

Item 2. The fibrous laminate according to item 1, wherein the ultrafine fibers are fibers spun by an electric field spinning process.

Item 3. The fibrous laminate according to item 1 or 2, wherein the contact points between the ultrafine fibers and the thermo-fusible conjugate fibers are bonded, and the formed bonding points are not subjected to compression flattening.

Item 4. The fibrous laminate according to any one of items 1 to 3, wherein the thermo-fusible conjugate fibers are composed of a high-melting point component and a low-melting point component that has a melting temperature lower than a melting temperature of the high-melting point component, and the ultrafine fibers are fibers having a melting temperature or softening temperature higher, by 10°C or more, than the melting temperature of the low-melting point component in the thermo-fusible conjugate fibers.

Item 5. The fibrous laminate according to any one of items 1 to 4, wherein the number of bonding points in a cross section of the fibrous laminate in a direction perpendicular to an interface of lamination between the fibrous layer I and the fibrous layer II is in the range of 4 to 30 pieces/mm.

Item 6. A fibrous laminate in which a fibrous layer III composed of thermo-fusible fibers is further laminated and united with the fibrous laminate according to any one of items 1 to 5, wherein contact points between the thermo-fusible conjugate fibers and the thermo-fusible fibers are bonded on a surface of the fibrous layer I by melting of the thermo-fusible fibers of the fibrous layer III, and the fibrous layer I and the fibrous layer III are laminated and united by the formed bonding points.

Item 7. A fibrous laminate in which the fibrous layer III composed of thermo-fusible fibers is further laminated and united with the fibrous laminate according to any one of items 1 to 5, wherein the fibrous layer II and the fibrous layer III are directly joined substantially without interposing the fibrous layer I.

Item 8. The fibrous laminate according to item 7, wherein the fibrous layer II and the fibrous layer III are joined at both ends of the fibrous laminate in a CD (crosswise direction) .

Item 9. A filter, wherein the fibrous laminate according to any one of items 1 to 8 is at least partially used.

### Advantageous Effects of Invention

A fibrous laminate of the invention can compensate a disadvantage of low mechanical strength and rigidity of the fibrous layer I composed of ultrafine fibers while reduction of characteristics original to ultrafine fibers, such as an ultrafine fiber diameter, a high specific surface area, a micropore diameter and high porosity is suppressed to a minimum, and therefore processability into a product such as a filter can be markedly improved. Moreover, the fibrous laminate has high gas and liquid permeability, excellent pressure resistance and durability, and can be preferably used as a filter medium having high performance and high service life. Moreover, the filter in which the fibrous laminate of the invention is used can utilize the characteristics of the fibrous laminate, and therefore has high gas and liquid permeability, excellent pressure resistance and durability, and high performance and high service life.

### Brief Description of Drawings

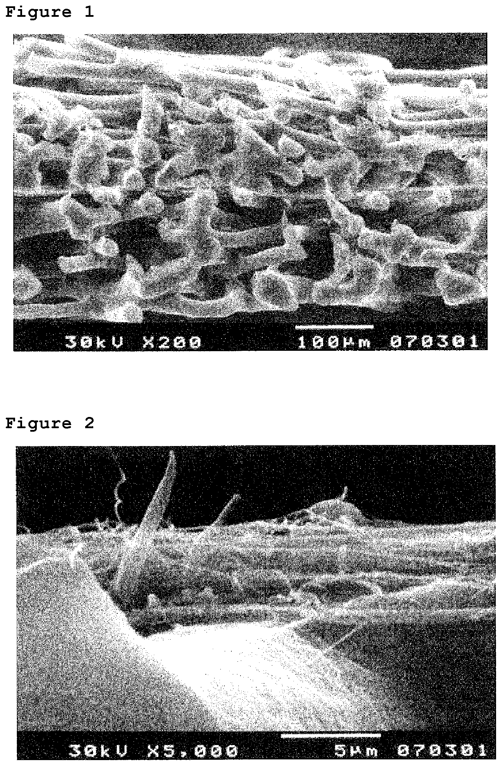

Figure 1 shows an observation image (magnification: 200) of a cross section of a fibrous laminate by using a scanning electron microscope.
Figure 2 shows an observation image (magnification: 5,000) of a cross section of a fibrous laminate by using a scanning electron microscope.

### Description of Embodiments

The invention will be described in more detail below.

A fibrous laminate of the invention includes a fibrous layer I composed of ultrafine fibers having a mean fiber diameter of 10 to 1,000 nanometers, and a fibrous layer II composed of thermo-fusible conjugate fibers having a mean fiber diameter of 5 to 100 micrometers. In the fibrous laminate, contact points between the ultrafine fibers and the thermo-fusible conjugate fibers are bonded by melting of the thermo-fusible conjugate fibers composing the fibrous layer II, and the fibrous layer I and the fibrous layer II are laminated and united in the formed bonding points.

### Fibrous layer I

The fibrous layer I is composed of the ultrafine fibers having the mean fiber diameter of 10 to 1,000 nanometers. The mean fiber diameter of the ultrafine fibers is preferably in the range of 60 to 600 nanometers, and further preferably in the range of 80 to 300 nanometers. If the mean fiber diameter of the ultrafine fibers is 10 nanometers or more, productivity of the ultrafine fibers is satisfactory and mechanical strength of the ultrafine fibers is high, and single fiber breakage of the ultrafine fibers and rupture of a layer of ultrafine fibers become hard to occur, and therefore such a case is preferred. Moreover, if the mean fiber diameter of the ultrafine fibers is 1,000 nanometers or less, characteristics original to the ultrafine fibers as derived from smallness (fineness) of the fiber diameter can be sufficiently exhibited, and therefore such a case is preferred.

A kind of the ultrafine fibers to be used in the invention and a production method thereof are not particularly limited. Publicly known ultrafine fibers and production method can be used. Specific examples thereof include ultrafine fibers prepared by a sea-island fiber solution process, such as polyester-based ultrafine fibers including polyethylene terephthalate-based ultrafine fibers, and nylon-based ultrafine fibers, ultrafine fibers prepared by a melt-blown process, such as polypropylene-based ultrafine fibers, and ultrafine fibers prepared by a force spinning process and an electric field spinning process, such as polyester-based ultrafine fibers, nylon-based ultrafine fibers, polyurethane-based ultrafine fibers, polyvinylidene fluoride-based ultrafine fibers, polyacrylonitrile-based ultrafine fibers, polyimide-based ultrafine fibers, polyamide-based ultrafine fibers, polysulfone-based ultrafine fibers, polyethersulfone-based ultrafine fibers, polyvinylalcohol-based ultrafine fibers, polystyrene-based ultrafine fibers, methylpolymethacrylate-based ultrafine fibers and inorganic ultrafine fibers including alumina-based and titanium oxide-based ultrafine fibers. The ultrafine fibers may be composed of a homopolymer synthesized by a single monomer, or a copolymer by copolymerization of a plurality of monomers. Moreover, the ultrafine fibers may be composed by a single material, or a mixture of two or more kinds of materials. Specific examples of the mixture of two or more kinds of materials include a polymer blend such as collagen and polyethylene oxide, and an inorganic and organic composite material such as hydroxyapatite particles and polyvinylpyrrolidone. Further, the ultrafine fibers may contain a functional agent within the range in which advantageous effects are not adversely affected, and specific examples thereof include an antibacterial agent, a deodorant, an electrically conductive material, a fluorescent material, a heat storage material, a hydrophilizing agent, a water-repelling agent, a surfactant, a bioaffinity material, a pharmaceutical ingredient and an enzyme. Moreover, the ultrafine fibers may be subjected to secondary processing in order to provide the ultrafine fibers with a function within the range in which the advantageous effects are not adversely affected, and specific examples thereof include coating treatment for hydrophillization or hydrophobilization, chemical treatment for introducing a specific functional group onto a surface of the ultrafine fibers each and sterilization treatment.

The ultrafine fibers to be used in the invention are not particularly limited, but are preferably the ultrafine fibers obtained by spinning the fibers by the electric field spinning process. The electric field spinning method refers to a fiber spinning method also referred to as an electrostatic spinning process, an electrospinning process or an electrospray deposition process. Specific examples of features of the electric field spinning process include capability of forming substances in a wide range into fibers, capability of obtaining ultrafine fibers having a mean fiber diameter of tens to hundreds of nanometers, a large specific surface area of the fibers obtained, and a small void (pore diameter) between fibers (pore diameter) in the obtained fibrous aggregate and large porosity on the other hand. Moreover, functional fibers in which a nanosubstance is dispersed into a matrix polymer can also be obtained by dispersing the nanosubstance typified by a carbon nanotube or graphene into a matrix polymer and applying electric field spinning to the above dispersion solution.

In a general electric field spinning process, a spinning solution into which a polymer is dissolved is electrically charged together with a spray needle made of metal with high voltage, and the solution is discharged from a leading end of the spray needle toward a grounded collecting electrode surface to form a liquid droplet. The liquid droplet formed of the solution material is attracted toward the collecting electrode surface by a strong electric field formed by an electric field concentration effect at the leading end of the spray needle to form a conical shape referred to as a Taylor cone. Accordingly, when force attracted to the collecting electrode surface exceeds surface tension of the liquid droplet, the liquid droplet of the polymer solution flies as a jet from a leading end of the Taylor cone to form fine droplets with volatilization of a solvent, and ultrafine fibers having a diameter of tens to hundreds of nanometers are collected on a collector to form a nonwoven fabric-shaped fibrous aggregate (fibrous layer I).

The thus obtained fibrous layer I composed of the ultrafine fibers has an ultrafine fiber diameter, a high specific surface area, an ultrafine pore diameter and high porosity, and can be preferably used for a cell culture base material such as a cell regeneration scaffold material, a sensor material, a secondary battery separator, a high performance filter medium, and a functional apparel material including a water-proof and permeability-proof material by taking advantage of the above features.

The ultrafine fibers to be used in the invention are not particularly limited, and may be one kind of the ultrafine fibers in which a diameter, a fiber constituent or the like is identical, or may be composed by mixing two or more kinds of ultrafine fibers in which the diameter, the fiber constituent material or the like is different. A mixing aspect is not particularly limited, and any mixing aspect may be applied in mixing fibers, laminating, a step arrangement or an inclined arrangement to an MD (machine direction) or CD (crosswise direction).

A basis weight of the fibrous layer I of the invention is not particularly limited, but is preferably in the range of 0.3 to 10 g/m², further preferably 0.5 to 5 g/m², and still further preferably 0.8 to 3 g/m². If the basis weight of the fibrous layer I is 0.3 g/m² or more, the mechanical strength is high, and therefore a defect such as rupture becomes hard to occur, and when the layer I is used as a filter, for example, collection efficiency thereof is improved, and therefore such a case is preferred. Moreover, if the basis weight of the fibrous layer I is 10 g/m² or less, productivity per area is improved, and therefore such a case is preferred.

### Fibrous layer II

In the invention, the fibrous layer II is composed of the thermo-fusible conjugate fibers having a mean fiber diameter of 5 to 100 micrometers. The mean fiber diameter of the thermo-fusible conjugate fibers is preferably in the range 10 to 60 micrometers, and further preferably 15 to 30 micrometers. The fibrous layer II in the fibrous laminate plays a role of the reinforcing material, such as protection of rupture of the fibrous layer I or compensation of insufficiency of the mechanical strength and rigidity. If the mean fiber diameter of the thermo-fusible conjugate fibers is 5 micrometers or more, productivity of the thermo-fusible conjugate fibers is satisfactory, and if the mean fiber diameter of the thermo-fusible conjugate fibers is 100 micrometers or less, the fibrous layer II forms no rough texture to have a satisfactory effect in protecting the fibrous layer I composed of the ultrafine fibers, and the thermo-fusible conjugate fibers are flexible to have no risk of damaging the fibrous layer I by contact.

A king of the thermo-fusible conjugate fibers to be used in the invention is not particularly limited, and publicly known thermo-fusible conjugate fibers can be used. As the thermo-fusible conjugate fibers, specifically, conjugate fibers composed of two or more kinds of components having a difference in melting temperatures can be used. Specific examples thereof include conjugate fibers composed of a high-melting point component and a low-melting point component. Specific examples of the high-melting point component include polypropylene, polyethylene terephthalate, polybutylene terephthalate, polytrimethylene terephthalate, nylon 6, nylon 6,6, and poly-L-lactic acid. Specific examples of the low-melting point component include low density polyethylene, linear low density polyethylene, high density polyethylene, a polyethylene terephthalate copolymer, poly-DL-lactic acid, a polypropylene copolymer, and polypropylene. The difference of melting temperatures between the high-melting point component and the low-melting point component in the thermo-fusible conjugate fibers is not particularly limited. In order to extend thermo-fusion processing temperature width, the difference is preferable 15°C or higher, and further preferably 30°C or higher. Moreover, a conjugation aspect is not particularly limited, but such a conjugation aspect can be applied as a concentric sheath-core type, an eccentric sheath-core type, a side-by-side type, a sea-island type and a radial type. Moreover, a cross sectional shape of the thermo-fusible conjugate fibers is not particularly limited, either, but any cross sectional shape may be applied, such as a circle, an elliptic, a triangle, a square, a U-shape, a boomerang shape, an octafoil shape, and a hollow.

The thermo-fusible conjugate fibers to be used in the invention may contain a functional agent within the range in which the advantageous effects of the invention are not adversely affected, and specific examples of the functional agent include an antibacterial agent, a deodorizer, an antistatic agent, an electrically conductive material, a fluorescent material, a smoothing agent, a hydrophilic agent, a water repellent, an antioxidant and a weathering agent. Moreover, in the thermo-fusible conjugate fibers, a surface thereof may be treated with a fiber finishing agent to provide the fibers with a function such as hydrophilicity, hydrophobicity, antielectricity, surface smoothness and wear resistance.

A layer of thermo-fusible conjugate fibers to be used in the invention is not particularly limited, and may be one kind of layer of thermo-fusible conjugate fibers in which the fiber diameter, the fiber constituent material or the like is identical, or two or more kinds of thermo-fusible conjugate fibers in which the fiber diameter, the fiber constituent or the like is different, or a mixture of the thermo-fusible conjugate fibers with other fibers (mixing fibers). Specific examples thereof include mixing of two kinds of thermo-fusible conjugate fibers each having a different fiber diameter in order to control a void in the fibrous layer II, mixing of thermo-fusible conjugate fibers with mono-component fibers in order to control thermal-fusibility, and mixing of thermo-fusible conjugate fibers with natural fibers such as cotton in order to provide the fibrous layer with hydrophilicity. A proportion of mixing the fibers when the fibrous layer includes fibers other than the thermo-fusible conjugate fibers is not particularly limited, but from a viewpoint of improving interlayer peeling strength in the fibrous laminate, the thermo-fusible conjugate fibers preferably occupy 50% by mass or more of the total, and further preferably 80% by mass or more of the total.

In the invention, a basis weight of the fibrous layer II is not particularly limited, but the basis weight of a general nonwoven fabric composed of thermo-fusible conjugate fibers can be applied. The basis weight thereof is preferably in the range of 5 to 100 g/m², and further preferably in the range of 15 to 60 g/m². The fibrous layer II composing at least one layer of the fibrous laminate functions as the reinforcing material for compensating the insufficiency of the mechanical strength and the rigidity of the fibrous layer I composing at least one layer of the fibrous laminate, and therefore from such a viewpoint, the basis weight of the fibrous layer II is preferably as large as possible. If the basis weight of the fibrous layer II is 5 g/m² or more, a satisfactory level of the strength and the rigidity of the fibrous laminate is attained, and if the basis weight is 15 g/m² or more, a sufficient can be attained. On the other hand, accordingly as the basis weight of the fibrous layer II becomes larger, the basis weight leads to cost increase. From such a viewpoint, the fibrous laminate is preferably composed of the fibrous layer II having a smallest possible basis weight. If the basis weight of the fibrous layer II is 100 g/m² or less, satisfactory cost is attained, and if the basis weight is 60 g/m² or less, sufficient cost is attained, and such a case is preferred.

A method of producing the fibrous layer II composed of the thermo-fusible conjugate fibers to be used in the invention is not particularly limited, and a publicly known method can be applied thereto. Specific examples of a web-forming method include a carding process, an air-laid process, a paper-making process and a tow opening process. Specific examples of a web-joining method include a through-air process, an embossing process, a calendering process, a resin bonding process, a water jetting process, a needle-punching process and a stitch bonding process. Specific examples of a direct nonwoven-forming method include a spunbonding process and a melt-blown process. The layer of thermo-fusible conjugate fibers produced by such a method may be directly used, or may be subjected to treatment such as antielectric processing, electrostatic processing, water-repellent processing, hydrophilic processing, antibacterial processing, ultraviolet absorption processing or near-infrared light absorption processing, according to an intended purpose.

The fibrous layer II to be used in the invention is not particularly limited, but preferably includes no part in which the fibers are compression-flattened. For example, if a nonwoven fabric including a part in which the fibers are compression-flattened into a film by heat embossing, such as a conjugate spunbond nonwoven, is used as the fibrous layer II, the part being compression-flattened into the film is involved in neither air permeation nor liquid permeation, and the characteristics of the ultrafine fibers in contact with the part are insufficiently exhibited. From such a viewpoint, the fibrous layer II that forms at least one layer of the fibrous laminate is preferably a nonwoven fabric in which a web obtained by the carding process, the air-laid process, the paper-making process or the tow opening method is joined by the through-air process, the resin bonding process, the water jetting process, the needle punching process or the stitch bonding process. Above all, such a nonwoven fabric is further preferred as the nonwoven fabric in which the web obtained by the carding process is joined by the through-air process, the nonwoven fabric in which the web obtained by the air-laid process is joined by the through-air process, and the nonwoven fabric in which the web obtained by the paper-making process is joined by the through-air process because such a nonwoven fabric is easily available.

### Fibrous layer III

The fibrous laminate of the invention in which the fibrous layer I and the fibrous layer II are laminated and united can be further laminated and united with a fibrous layer III into a multilayer of three or more layers. For example, the contact points between the thermo-fusible conjugate fibers and the thermo-fusible fibers are bonded by bonding of the thermo-fusible fibers of the fibrous layer III on the fibrous layer I surface, and the fibrous layer I and the fibrous layer III can be laminated and united by the formed bonding points. Moreover, for example, the fibrous layer II and the fibrous layer III can be directly joined substantially without interposing the fibrous layer I, and laminated and united. In the thermo-fusible fibers composing the fibrous layer III, the mean fiber diameter is preferably 5 to 100 micrometers. The fibrous layer III may be identical with or different from the fibrous layer II in structure such as a constituent material, a composition, a fiber diameter, a basis weight and a production method, and the structure can be selected from the structure exemplified as the structure of the fibrous layer II.

### Fibrous laminate (fibrous layer I and fibrous layer II)

A combination of the fibrous layer I and the fibrous layer II in the laminate is not particularly limited, as long as the advantageous effects of the invention can be produced. The ultrafine fibers exemplified as the fibrous layer I and the thermo-fusible conjugate fibers exemplified as the fibrous layer II only need to be combined according to an application in which the laminate is used. For example, in an application in which chemical resistance is required, a combination of polyvinylidene fluoride-based ultrafine fibers obtained by the electric field spinning process and a nonwoven fabric composed of thermo-fusible conjugate fibers having high density polyethylene and polypropylene as a sheath and core can be preferably used. Moreover, in an application in which heat resistance is required, a combination of nylon 6,6 ultrafine fibers obtained by the electric field spinning process and a needle punch nonwoven fabric prepared by mixing thermo-fusible conjugate fibers having polypropylene and polyethylene terephthalate as a sheath and a core, and polyethylene terephthalate mono-component fibers can be preferably used. From a viewpoint of facilitating material recycle, a combination of polypropylene ultrafine fibers spun by the melt-blown process or the force spinning process, and a nonwoven fabric composed of thermo-fusible conjugate fibers of a polypropylene copolymer and polypropylene as a sheath and core can be preferably used. Further, the above fibers can be appropriately combined according to an application in which the laminate is used or required characteristics.

### Fibrous laminate (fibrous layer II, fibrous layer I and fibrous layer III)

Moreover, a combination of the fibrous layer I, the fibrous layer II and the fibrous layer III in the fibrous laminate is not particularly limited, as long as the advantageous effects of the invention can be produced. The ultrafine fibers exemplified as the fibrous layer I, the thermo-fusible conjugate fibers exemplified as the fibrous layer II and the thermo-fusible fibers exemplified as the fibrous layer III only need to be combined according to an application in which the laminate is used. As the above combinations, the fibers only need to be appropriately combined according to the required characteristics or the application in a similar manner as described above.

In the fibrous laminate, an interlayer between the fibrous layer I and the fibrous layer II and an interlayer between the fibrous layer I and the fibrous layer III are united by fusion, respectively. However, the fibrous layer II and the fibrous layer III may be partially directly united substantially without interposing the fibrous layer I, and the fibrous layer II and the fibrous layer III may be united at both ends of the fibrous laminate in the CD (crosswise direction).

Specific examples of such a fibrous laminate further include a fibrous laminate formed of two layers of fibrous layer II (thermo-fusible conjugate fibers)-fibrous layer I (ultrafine fibers) and a fibrous laminate formed of three layers of fibrous layer II (thermo-fusible conjugate fibers)-fibrous layer I (ultrafine fibers)-fibrous layer III (thermo-fusible fibers). In addition thereto, specific examples include a fibrous laminate formed of five layers of fibrous layer II (thermo-fusible conjugate fibers)-fibrous layer I (ultrafine fibers)-fibrous layer II (thermo-fusible conjugate fibers)-fibrous layer I (ultrafine fibers)-fibrous layer III (thermo-fusible fibers), and a fibrous laminate formed of six layers of fibrous layer II (thermo-fusible conjugate fibers)-fibrous layer I (ultrafine fibers)-fibrous layer III (thermo-fusible fibers)-fibrous layer II (thermo-fusible conjugate fibers)-fibrous layer I (ultrafine fibers)-fibrous layer III (thermo-fusible fibers). If the fibrous layer I (ultrafine fibers) are laminated on both sides of front and back surfaces (top and bottom) of the layer with the fibrous layer II (thermo-fusible conjugate fibers) or the fibrous layer III (thermo-fusible fiber), no ultrafine fibers are exposed onto the fibrous laminate surface. Upon processing the ultrafine fibers into the product such as the filter, for example, a defect such as occurrence of rupture in contact of the ultrafine fibrous layer with a processing apparatus is eliminated, and processability is markedly improved, and such a case is preferred.

In the fibrous laminate of the invention, with regard to uniting through lamination, the contact points between the ultrafine fibers and the thermo-fusible conjugate fibers are bonded by melting of the thermo-fusible conjugate fibers composing the fibrous layer II, and the fibrous layer I and the fibrous layer II are laminated and united by the formed bonding points. In the thermo-fusible conjugate fibers, only the low-melting point component can be melted by applying heat treatment at a temperature between fusion temperatures of the high-melting point component and the low-melting point component composing the thermo-fusible conjugate fibers, and thermo-fusion characteristics can be sufficiently exhibited. Mono-component fibers composed of a thermoplastic resin are also known as fibers having thermo-fusion characteristics. However, if the mono-component fibers are used for thermo-fusion, the fibers significantly shrink during fusion, or a fiber shape cannot be maintained by melting in several cases, and the fibers are unsuitable depending on the application in which the fibrous laminate is used in several cases. In order to prevent the above defects, heat treatment while pressure is acted at a temperature equal to or lower than the melting temperature of the mono-component fibers is applied, specifically heat press processing, heat calendering and heat embossing are applied in many cases. However, in the case of the heat treatment method in association with pressurization, the fibers are inevitably subjected to damage such as compression flattening into the film, and simultaneously such a defect is easily caused as formation of the film of the ultrafine fibers composing the fibrous layer I by heat or pressure, and rupture thereof.

On the other hand, in the case of the thermo-fusible conjugate fibers, the low-melting point component and the high-melting point component are conjugated, and therefore even if the heat treatment at the fusion temperature of the low-melting point component or higher, such a case does not cause where the fibers excessive shrink or deform or where the low-melting point component flows into the film. Accordingly, if the thermo-fusible conjugate fibers are used, the low-melting point component can be melted only by heat without applying pressurization, and an interface (also referred to as the interlayer) in which the fibrous layer II composed of the thermo-fusible conjugate fibers and the fibrous layer I composed of the ultrafine fibers are laminated can be united by fusion. Adhesion points between the fibrous layer I and the fibrous layer II are only in a contact part of the contact points between the ultrafine fibers composing the fibrous layer I and the thermo-fusible conjugate fibers composing the fibrous layer II, and uniting through lamination can be achieved while high void structure is maintained without excessively causing the damage onto the ultrafine fibers and without causing flow of the melted low-melting point component to be excessively infiltrated into the ultrafine fibers.

In the fibrous laminate of the invention, the number of bonding points formed by bonding of the contact points between the ultrafine fibers and the thermo-fusible conjugate fibers in the cross section of the fibrous laminate in a direction perpendicular to the interface of lamination between the fibrous layer I and the fibrous layer II is not particularly limited, but the number is preferably in the range of 4 to 30 pieces/mm, and further preferably in the range of 8 to 20 pieces/mm in the interlayer, respectively. If the number of the bonding points is large, the interlayer peeling strength between the fibrous layer I and the fibrous layer II laminated is improved. If the number thereof is 4 pieces/mm or more, satisfactory interlayer adhesion strength is attained, and therefore such a case is preferred, and if the number thereof is 8 pieces/mm or more, sufficient interlayer adhesion strength is achieved, and therefore such a case is further preferred. Moreover, if the number of bonding points is smaller, the characteristics original to the layer of ultrafine fibers can be further exhibited. If the number thereof is 30 pieces/mm or less, reduction of performance of the layer of ultrafine fibers can be suppressed, and therefore such a case is preferred, and if the number thereof is 20 pieces/mm or less, the reduction can be sufficiently suppressed, and therefore such a case is further preferred. When the fibrous laminate of the invention has the interface of lamination between the fibrous layer I and the fibrous layer III, the number of bonding points in the relevant interface is not particularly limited, but the number thereof is preferably in the range of 4 to 30 pieces/mm, and further preferably in the range of 8 to 20 pieces/mm, in each interlayer in a manner similar to the case of the interface of lamination between the fibrous layer I and the fibrous layer II.

The fibrous laminate of the invention is not particularly limited, but the thermo-fusible conjugate fibers are preferably subjected to no compression flattening in the bonding points. For example, if the heat treatment in association with thermocompression bonding such as heat pressing, heat calendering or heat embossing is applied, the defect is easily caused in which the fibers are flattened, and the ultrafine fibers are compression-bonded into the film or the void formed by the ultrafine fibers is crushed. In the case of the thermo-fusible conjugate fibers, the low-melting point component is conjugated with the high-melting point component, and therefore even if the thermocompression bonding is performed under conditions in which only the low-melting point component is melted, the high-melting point component maintains the fiber shape. Therefore, the thermo-fusible conjugate fibers are more difficult in causing compression flattening in comparison with mono-component fibers, and the damage onto the ultrafine fibers and reduction of permeability can be suppressed. However, if the thermocompression bonding is performed under excessive conditions, even the thermo-fusible conjugate fibers are compression-flattened into a film shape, and therefore the heat treatment is desirably applied by a method and conditions in which thermo-fusible conjugate fibers are subjected to no compression flattening. In the bonding points, a method of uniting through lamination without causing the compression flattening of the thermo-fusible conjugate fibers is not particularly limited. Specific examples thereof include through-air processing by circulating hot-air and thermal processing by radiation heat. A temperature of the through-air processing or the radiation heat processing is not particularly limited, but the temperature is preferably a level equal to or higher than the melting temperature of the low-melting point component in the thermo-fusible conjugate fibers, and less than a melting temperature or softening temperature of the ultrafine fibers.

Moreover, an operation of applying moderate pressure to the fibrous layer I and the fibrous layer II laminated to consolidate both by using remaining heat immediately after the through-air processing or radiation heat processing to improve the interlayer adhesion strength can also be appropriately performed in the range in which the thermo-fusible conjugate fibers are subjected to no excessive compression flattening, namely in the range in which the high-melting point component in the thermo-fusible conjugate fibers is not deformed to maintain the fiber shape. Such a consolidation operation is performed in the state in which the low-melting point component in the thermo-fusible conjugate fibers is melted. Therefore, such an operation can be performed at a significantly lower pressure, in comparison with pressure conditions of the heat pressing processing, the heat calendering or the heat embossing, and can be preferably performed as the method of improving the interlayer peeling strength while suppressing reduction of air permeability by flattening of the thermo-fusible conjugate fibers and the damage onto the ultrafine fibers.

In the fibrous laminate of the invention, uniting through lamination is performed by bonding of the thermo-fusible conjugate fibers. Therefore, in the case of the fibers in which the ultrafine fibers have thermoplasticity, the melting temperature or softening temperature of the ultrafine fibers is preferably higher than the melting temperature of the low-melting point component in the thermo-fusible conjugate fibers. The melting temperature or softening temperature of the ultrafine fibers is not particularly limited, but is higher preferably by 10°C or more, and further preferably by 30°C or more, than the melting temperature of the low-melting point component in the thermo-fusible conjugate fibers. If the melting temperature or softening temperature of the ultrafine fiber is higher, by 10°C or more, than the melting temperature of the low-melting point component in the thermo-fusible conjugate fibers, only the low-melting point component in the thermo-fusible conjugate fibers is melted by heat treatment in the range between the temperatures, and the contact points between the layer of thermo-fusible conjugate fibers and the layer of ultrafine fibers are bonded by thermo-fusion, and both layers can be laminated and united, and therefore such a case is preferred. If the melting temperature or softening temperature of the ultrafine fibers is higher by 30°C or more than the melting temperature of the low-melting point component in the thermo-fusible conjugate fibers, a processing temperature width heat treatment can be extended, and therefore such a case is further preferred.

A method of laminating each fibrous layer in the fibrous laminate of the invention is not particularly limited. Specific examples thereof include a method of preparing a fibrous laminate including two layers of fibrous layer II (nonwoven fabric composed of a layer of thermo-fusible conjugate fibers) -fibrous layer I (ultrafine fibers) by using a nonwoven fabric composed of thermo-fusible conjugate fibers as a base material nonwoven fabric (fibrous layer II) for collecting ultrafine fibers thereon to collect the ultrafine fibers onto the nonwoven fabric composed of the thermo-fusible conjugate fibers in an electric field spinning step, and a method of preparing a fibrous laminate including three layers of fibrous layer II (nonwoven fabric composed of the thermo-fusible conjugate fibers) -fibrous layer I (ultrafine fibers)-fibrous layer III (nonwoven fabric composed of the thermo-fusible fibers) by laminating the nonwoven fabric composed of the thermo-fusible fibers onto the above-described fibrous laminate. A step of uniting the fibrous laminate by bonding of the thermo-fusible conjugate fibers or the thermo-fusible fiber is not particularly limited, but continuously performing uniting of layers after each fibrous layer is laminated is preferred from viewpoints of simplifying the step to improve a yield, and omitting steps of winding onto a roll and paying out therefrom to suppress development of wrinkles onto the fibrous laminate.

The fibrous laminate of the invention is not particularly limited, but the fibrous laminate preferably includes a region in which the fibrous layer II (thermo-fusible conjugate fibers) and the fibrous layer III (thermo-fusible fibers) are directly bonded with each other. The interlayer adhesion when the fibrous layer II (thermo-fusible conjugate fibers) and the fibrous layer III (thermo-fusible fibers) are laminated is performed by mutually melting the fibers in both layers to achieve thermo-fusion, and therefore the interlayer adhesion is markedly improved in comparison with the interlayer adhesion force in the case of laminating the thermo-fusible conjugate fibers and the ultrafine fibers. The interlayer adhesion force is satisfactory when the thermo-fusible conjugate fibers and the ultrafine fibers are laminated. However, if the laminate includes the region in which the thermo-fusible conjugate fibers are directly bonded with each other, the interlayer adhesion force in the fibrous laminate becomes sufficient, and processability into the product such as the filter can be significantly improved, and therefore such a case is preferred.

When the fibrous laminate of the invention includes the region in which the thermo-fusible conjugate fibers are directly bonded with each other, although the region is not particularly limited, the region preferably is at both ends of the fibrous laminate in the crosswise direction. When the fibrous laminate causes interlayer peeling, peeling is caused from a peripheral part of the fibrous laminate in many cases. However, if the thermo-fusible conjugate fibers are directly bonded with each other at both ends of the fibrous laminate in the crosswise direction, a periphery of the fibrous laminate is strongly bonded and laminated and united, and therefore the laminate becomes hard to cause the interlayer peeling, and such a case is preferred. A method of preparing the region in which the thermo-fusible conjugate fibers are directly bonded at both ends of the fibrous laminate in the crosswise direction is not particularly limited. However, specific examples thereof include a method of applying heat treatment, upon preparing a fibrous laminate including two layers of fibrous layer II (nonwoven fabric composed of a layer of thermo-fusible conjugate fibers)-fibrous layer I (ultrafine fibers) by collecting ultrafine fibers on the nonwoven fabric (base material) composed of the thermo-fusible conjugate fibers in an electric field spinning step, after intentionally providing selvages in which no ultrafine fibers are laminated at both ends of the fibrous layer II to be used as a base material nonwoven fabric in the crosswise direction and laminating a nonwoven fabric composed of the thermo-fusible conjugate fibers, the fabric having a width identical with the width of the nonwoven fabric of fibrous layer II in such a manner that the fibrous layer I (ultrafine fibers) serves as a middle layer. A width of the region in which the thermo-fusible conjugate fibers are directly bonded is not particularly limited, but is preferably in the range of 5 to 100 millimeters, and further preferably in the range of 20 to 60 millimeters. If the width of the region in which the thermo-fusible conjugate fibers are directly bonded thereto is 5 millimeters or more, the layers in the fibrous laminate are laminated and united at a satisfactory degree, and if the width thereof is 20 millimeters or more, the layers are sufficiently laminated and united, and processability into the product is improved, and therefore such a case is preferred. Moreover, if the width of the region in which the thermo-fusible conjugate fibers are directly bonded thereto is 100 millimeters or less, an area of a part in which no ultrafine fibers exist in the fibrous laminate is minimized at a satisfactory degree, and if the width is 60 millimeters or less, the area is sufficiently minimized, and the fibrous laminate can exhibit the characteristics derived from the ultrafine fibers, and therefore such a case is preferred. In addition, the invention has no intention of only an aspect in which no fibrous layer I (ultrafine fibers) exists at all in the above-described "region." A small amount of ultrafine fibers may exist as long as desired interlayer peeling properties can be secured. Accordingly, according to a required application or industrial design, a high or low level is provided in integration density of the fibrous layer I (ultrafine fibers) depending on adjustment of a production speed of the fibrous layer I (ultrafine fibers), a speed of a collection conveyer or the like, and the region can be repeatedly formed in the MD direction not only in end portions of the fibrous laminate. In the "region," no existence of the fibrous layer I (ultrafine fibers) is substantially preferred, and no existence thereof at all is particularly preferred.

The fibrous laminate of the invention is not particularly limited, but can include a layer other than the fibrous layer II (thermo-fusible conjugate fibers) and the fibrous layer I (ultrafine fibers) within the range in which the advantageous effects of the invention are not adversely affected. Specific examples thereof include a mesh, a net and a nonwoven fabric composed of thick fibers for improving rigidity and pleats characteristics of the fibrous laminate, a polypropylene-based or polyester-based nonwoven fabric for providing the fibrous laminate with ultrasonic adhesion properties, and a microporous film for improving filtration precision of the fibrous laminate. The mesh, the net, the nonwoven fabric and the microporous film are not particularly limited, but if such a material is arranged so as to be brought in contact with the layer of thermo-fusible conjugate fibers of the fibrous laminate, such a material can be united by bonding of the relevant thermo-fusible conjugate fibers, and therefore such a case is preferred.

The fibrous laminate of the invention has both the characteristics derived from the fibrous layer I (ultrafine fibers) and the mechanical strength and the rigidity derived from the fibrous layer II (thermo-fusible conjugate fibers) at a high level, and can be processed into the product in taking advantage of the characteristics derived from the ultrafine fibers at an excellent yield and operability. The product in which the fibrous laminate is used is not particularly limited, but specific examples thereof include a liquid filter for filtering and purifying water for washing precision equipment and a dispersion liquid for fine abrasive particles, a water treatment filter for purifying industrial waste water and drinking water, a moisture-permeable water-proof functional apparel raw material, and a secondary-battery separator.

### Examples

The invention will be described in greater detail by way of Examples below, but the invention is not limited by Examples. In addition, measuring methods or definitions with regard to values of physical properties shown in Examples are also described below.

### (1) Mean fiber diameter of ultrafine fibers and thermo-fusible conjugate fibers

The ultrafine fibers and the thermo-fusible conjugate fibers were observed using a scanning electron microscope JSM-5410LV made by JEOL Co., Ltd., and diameters of 50 fibers were measured using image analysis software. A mean value of the fiber diameters in 50 fibers was taken as a mean fiber diameter.

### (2) Fusion temperature of ultrafine fibers and low-melting point component of thermo-fusible conjugate fibers

Measurement was carried out in the temperature range of room temperature to 230°C under conditions of a heating rate of 10°C/min, a nitrogen atmosphere and 4 mg of sample weight by using a DSC measuring apparatus Q10 made by TA Instruments Inc., and a melting peak top temperature was taken as a fusion temperature(°C).

### (3) Number of bonding points in cross section of fibrous laminate in a direction perpendicular to interface of lamination between fibrous layer I and fibrous layer II

A cross section of the fiber laminate was cut out from the laminate, and the cross section was observed at a magnification of 200 times by using a scanning electron microscope JSM-5410LV made by JEOL Co., Ltd. In the thus obtained image of the interface between the fibrous layer I and the fibrous layer II, the number of thermo-fusible conjugate fibers bonded with the ultrafine fibers was counted, and the number (pieces/mm) of the bonding points per unit length was calculated from a length of the cross section in the image measured using image analysis software.

### (4) Interlayer adhesion properties

Each interlayer adhesion property in the fibrous laminate was judged based on the criteria below.

Excellent: an interlayer was not easily peeled off even if a fibrous laminate wound around a roll was paid out, and peeling of each interlayer was tried by hand.

Good: no part in which each interlayer was peeled off was observed, even if a fibrous laminate wound around a roll was paid out.

Marginal: a part in which each interlayer was partially peeled off was observed, when a fibrous laminate wound around a roll was paid out.

Poor: each interlayer was peeled off, and no uniting through lamination was caused, when a fibrous laminate wound around a roll was paid out.

### (5) Processability

Operability, a yield and quality of the obtained product upon processing a fibrous laminate into an intended product were comprehensively judged, and processability was evaluated based on the criteria below.
⊚ : operability, a yield and product quality were at sufficient levels.
○ : operability, a yield and product quality were at satisfactory levels.
Δ : operability, a yield and product quality were at allowable levels.
× : operability, a yield and product quality were at unallowable levels.

### (6) Filter characteristics

Filter characteristics of a filter product obtained by processing a fibrous laminate were evaluated and judged based on the criteria below.

Excellent: filter characteristics expected from characteristics of a layer of ultrafine fibers were obtained at sufficient levels.

Good: filter characteristics expected from characteristics of a layer of ultrafine fibers were obtained at satisfactory levels.

Marginal: filter characteristics expected from characteristics of a layer of ultrafine fibers were obtained at allowable levels.

Poor: filter characteristics expected from characteristics of a layer of ultrafine fibers were obtained at unallowable levels.

### Example 1

A 600 mm-wide nonwoven fabric of polypropylene ultrafine fibers was prepared by a melt-blown process by using a polypropylene resin (grade name: Achieve 6936) made by ExxonMobil Chemical Company. With regard to the obtained nonwoven fabric of polypropylene ultrafine fibers, a basis weight was 10 g/m², a mean fiber diameter was 760 nm and a melting temperature was 154°C.

Next, a paper-making nonwoven fabric having a basis weight of 40 g/m² and a width of 600 mm (in which, mixed fibers were used at 40/60 (w/w) in a ratio of mixing fibers for polyethylene terephthalate fibers having a fiber diameter of 14 µm and a sheath-core thermo-fusible conjugate fibers containing copolymerized polyester-polyethylene terephthalate as a sheath-core and having a fiber diameter of 16 µm) was arranged

The nonwoven fabric of polypropylene ultrafine fibers was used as a fibrous layer I and the paper-making nonwoven fabric was used as a fibrous layer II, and both were laminated, and heat-treated by a Yankee dryer at 120°C in order to cause uniting. The copolymerized polyester composing the sheath-core thermo-fusible conjugate fibers contained in the paper-making nonwoven fabric had a fusion temperature of 82°C. Thus, the copolymerized polyester being a sheath component was melted and bonded with the nonwoven fabric of polypropylene ultrafine fibers through heat treatment by the Yankee dryer at 120°C.

In the obtained fibrous laminate, the number of bonding points was 7 pieces/mm in an interface of lamination between the paper-making nonwoven fabric being fibrous layer II and the nonwoven fabric of polypropylene ultrafine fibers, the nonwoven fabric being the fibrous layer I to cause no easy peeling of the interface of lamination, and satisfactory interlayer adhesion force was attained.

Further, when a cylindrical cartridge filter was prepared by winding the obtained fibrous laminate having two layers around a core material, the fibrous laminate had sufficient strength and handling properties, and filter processing was practicable with high operability. Moreover, in the obtained filter, no defect such as rupture of fibrous layer I was found, and the product satisfactorily functioned as the filter.

### Example 2

A polyurethane resin (grade name: T1190) made by DIC Bayer Polymer Ltd. was dissolved, at a concentration of 12.5% by mass, into a cosolvent of N,N-dimethylformamide and acetone (60/40 (w/w)) to prepare an electric field spinning solution.

Next, a carding process through-air nonwoven fabric having a basis weight of 40 g/m² and a width of 1,000 mm (in which, a sheath-core thermo-fusible conjugate fibers containing high density polyethylene and polyethylene terephthalate as a sheath and a core and having a fiber diameter of 22 µm was used) was arranged as a base material nonwoven fabric, electric field spinning of the polyurethane solution was performed thereon to prepare a fibrous laminate formed of two layers of the base material nonwoven fabric and the polyurethane ultrafine fibers.

As conditions of electric field spinning, a 27G needle was used, a solution feed rate per a single pore was adjusted to 2.0 mL/h, an applied voltage was adjusted to 35 kV, and a spinning distance was adjusted to 17.5 cm.

With regard to the obtained polyurethane ultrafine fibers in the fibrous laminate formed of two layers, a basis weight in the layer was 3.0 g/m², a mean fiber diameter was 450 nm and a melting temperature was 175°C. In addition, upon laminating a polyurethane layer of ultrafine fibers onto the base material nonwoven fabric by electric field spinning, 50 mm selvages on which no polyurethane layer of ultrafine fibers was laminated were provided at both ends of the base material nonwoven fabric, respectively.

Next, a conjugate spunbond nonwoven fabric having a basis weight of 20 g/m² and a width of 1,000 mm (in which, sheath-core conjugate fibers containing linear low density polyethylene and polypropylene as a sheath and a core and having a fiber diameter of 16 µm were used as thermo-fusible fibers) was arranged.

A polyurethane layer of ultrafine fibers was used as a fibrous layer I, the base material nonwoven fabric was used as a fibrous layer II, and the conjugate spunbond nonwoven fabric was further used as a fibrous layer III, and all layers were laminated in such a manner that the polyurethane layer of ultrafine fibers served as a middle layer, and heat-treated by a through-air heat treatment machine at 138°C to cause uniting.

The high density polyethylene being a low-melting point component composing the sheath-core thermo-fusible conjugate fibers contained in the base material nonwoven fabric had a fusion temperature of 131°C, and the linear low density polyethylene being a low-melting point component composing the thermo-fusible fibers contained in the conjugate spunbond nonwoven fabric had a fusion temperature of 125°C, and therefore each low-melting point component was melted and bonded with the polyurethane ultrafine fibers by heat treatment at 138°C.

In the obtained fibrous laminate, the number of bonding points was 16 pieces/mm in an interface of lamination between the carding process air-through nonwoven fabric being fibrous layer II and the polyurethane layer of ultrafine fibers being fibrous layer I, and the number of bonding points was 20 pieces/mm in an interface of lamination between the conjugate spunbond nonwoven being fibrous layer III and the polyurethane layer of ultrafine fibers being fibrous layer I, and sufficient interlayer adhesion force was attained. Moreover, the fibrous laminate in which uniting through lamination was caused by fusion between the thermo-fusible conjugate fibers and the thermo-fusible fibers included, in 50 mm at both ends of the fibrous laminate in a crosswise direction, a region in which the layer of thermo-fusible conjugate fibers, the layer being the fibrous layer II, and the thermo-fusible fibers being the fibrous layer III were directly bonded with each other, and the region had a feature of stronger interlayer adhesion. The fibrous laminate in Example 2 was strongly bonded in both end parts, and therefore was hard to cause interlayer peeling.

Further, in order to manufacture a pleated filter using the obtained fibrous laminate formed of three layers, pleating was performed under conditions of a folding width of 40 mm, and the fibrous laminate caused no peeling and stable operability was attained. Moreover, in the obtained pleated filter, no defect such as rupture of the polyurethane layer of ultrafine fibers was found, and predetermined gas filter characteristics were obtained.

### Example 3

Kynar (trade name) 3120 being a polyvinylidene fluoride-hexafluoropropylene (hereinafter, abbreviates as "PVDF-HFP") resin made by Arkema Corporation was dissolved, at a concentration of 18% by mass, into a cosolvent of N,N-dimethylacetamide and acetone (60/40 (w/w)) to prepare an electric field spinning solution.

Next, a carding process through-air nonwoven fabric 1 having a basis weight of 20 g/m² and a width of 1,100 mm (in which, sheath-core thermo-fusible conjugate fibers containing high density polyethylene and polypropylene as a sheath and a core and having a fiber diameter of 22 µm were used) was arranged as a base material nonwoven fabric, and electric field spinning of the PVDF-HFP solution was performed thereon to prepare a fibrous laminate formed of two layers of the base material nonwoven fabric and a PVDF-HFP layer of ultrafine fibers. As conditions of electric field spinning, a 27G needle was used, a solution feed rate per a single pore was adjusted to 3.0 mL/h, an applied voltage was adjusted to 45 kV and a spinning distance was adjusted to 12.5 cm.

With regard to the obtained PVDF-HFP ultrafine fibers in the fibrous laminate formed of two layers, a basis weight of the layer was 1.5 g/m², a mean fiber diameter was 310 nm and a melting temperature was 163°C. In addition, upon laminating the layer of PVDF-HFP ultrafine fibers onto the base material nonwoven fabric by electric field spinning, 30 mm-wide selvages on which no layer of PVDF-HFP ultrafine fibers was laminated were provided at both ends of the base material nonwoven fabric, respectively.

Next, a carding process through-air nonwoven fabric 2 having a basis weight of 30 g/m² and a width of 1,100 mm (in which, sheath-core conjugate fibers containing high density polyethylene and polypropylene as a sheath and a core and having a fiber diameter of 30 µm were used as thermo-fusible fibers) was arranged.

The layer of PVDF-HFP ultrafine fibers was used as a fibrous layer I, the base material nonwoven fabric was used as a fibrous layer II, the carding process through-air nonwoven fabric was further used as a fibrous layer III, and all layers were laminated in such a manner that the layer of PVDF-HFP ultrafine fibers served as a middle layer, and heat-treated by a through-air heat treatment machine at 143°C to cause uniting.

The high density polyethylene being a low-melting point component in the sheath-core thermo-fusible conjugate fibers that compose the carding process through-air nonwoven fabric 1 and in the thermo-fusible fibers that compose the carding process through-air nonwoven fabric 2 had a fusion temperature of 131°C, and therefore the high density polyethylene was melted and bonded with the PVDF-HFP ultrafine fibers by heat treatment at 143°C.

In the obtained fibrous laminate, the number of bonding points was 18 pieces/mm in an interface of lamination between the carding process through-air nonwoven fabric 1 being the fibrous layer II and the layer of PVDF-HFP ultrafine fibers, the layer being the fibrous layer I, and the number of bonding points was 10 pieces/mm in an interface of lamination between the carding process through-air nonwoven fabric 2 being the fibrous layer III and the layer of PVDF-HFP ultrafine fibers, the layer being the fibrous layer I, and sufficient interlayer adhesion force was attained.

Moreover, the fibrous laminate formed of three layers in which uniting through lamination was caused by fusion between the thermo-fusible conjugate fibers and the thermo-fusible fibers included, in 30 mm width at both ends of the fibrous laminate in the crosswise direction, a region in which the layer of thermo-fusible conjugate fibers, the layer being the fibrous layer II, and the thermo-fusible fibers being the fibrous layer III were directly bonded with each other, and the region had a feature of stronger interlayer adhesion. In the fibrous laminate in Example 3, both end parts are strongly bonded, and therefore the laminate was hard to cause interlayer peeling.

Further, the obtained fibrous laminate formed of three layers was introduced into a punching machine, and cut into a circle shape having a diameter of 8 cm to prepare a membrane filter. In the punching machine, no defect such as entangling and rupture of the layer of PVDF-HFP ultrafine fibers was caused, and sufficient operability and yield were attained. Moreover, when the obtained membrane filter was used for suction filtration, no rupture of the layer of PVDF-HFP ultrafine fibers or the like was caused, and the layers of the base material nonwoven fabric, and the carding process through-air nonwoven fabrics 1, 2 functioned as a support material, and stable filtration was attainable.

### Example 4

An electric field spinning solution was prepared in a manner similar to Example 3 except that 0.1% by mass of sodium dodecyl sulfate was added to the electric field spinning solution.

Next, a carding process through-air nonwoven fabric 1 in a manner similar to the nonwoven fabric used in Example 3 was arranged as a base material nonwoven fabric, and electric field spinning of the PVDF-HFP solution was performed thereon to prepare a fibrous laminate formed of two layers of the base material nonwoven fabric and a layer of PVDF-HFP ultrafine fibers. As conditions of the electric field spinning, a 27G needle was used, a solution feed rate per single pore was adjusted to 3.3 mL/h, an applied voltage was adjusted to 40 kV and a spinning distance was adjusted to 12.5 cm.

With regard to the PVDF-HFP ultrafine fibers in the obtained fibrous laminate formed of two layers, a basis weight thereof was 1.5 g/m², a mean fiber diameter was 110 nm and a fusion temperature was 163°C. In addition, in a manner similar to Example 3, 30 mm-wide selvages on which no layer of PVDF-HFP ultrafine fibers was laminated were provided at both ends of the base material nonwoven fabric.

On the two-layered fibrous laminate in which the layer of PVDF-HFP ultrafine fibers was used as the fibrous layer I and the base material nonwoven fabric was used as the fibrous layer II, and further as a fibrous layer III, a carding process through-air nonwoven fabric 1 in a similar to the base material nonwoven fabric was laminated in such a manner that the layer of PVDF-HFP ultrafine fibers served as a middle layer, and all layers were heat-treated by a through-air heat treatment machine at 143°C to cause uniting.

The high density polyethylene being a low-melting point component in the sheath-core thermo-fusible conjugate fibers composing the fibrous laminate had a fusion temperature of 131°C, and therefore was melted and bonded with the PVDF-HFP ultrafine fibers by heat treatment at 143°C.

In the obtained fibrous laminate, the number of bonding points was 22 pieces/mm in an interface of lamination between the carding process through-air nonwoven fabric 1 being the fibrous layer II and the layer of PVDF-HFP ultrafine fibers, the layer being the fibrous layer I, and the number of bonding points was 18 pieces/mm in an interface of lamination between the carding process through-air nonwoven fabric 2 being the fibrous layer III and the PVDF-HFP ultrafine fibers being the fibrous layer I, and sufficient interlayer adhesion force was attained.

Moreover, the fibrous laminate formed of three layers in which uniting through lamination was caused by bonding of the thermo-fusible conjugate fibers included, in a 30 mm width at both ends of the fibrous laminate in the crosswise direction, a region in which the layer of thermo-fusible conjugate fibers, the layer being the fibrous layer II, and the thermo-fusible fibers being the fibrous layer III were directly bonded with each other, and the region had a feature of stronger interlayer adhesion. In the fibrous laminate in Example 4, both end parts were strongly bonded, and therefore the laminate was hard to cause interlayer peeling.

The obtained fibrous laminate formed of three layers was laminated with a mesh made of polypropylene for providing the laminate with rigidity, and pleating was performed under conditions of a folding width of 10 mm, and no peeling of the fibrous laminate was caused, and stable operability was attained. Moreover, in the obtained pleated filter, no defect such as rupture of the fibrous layer I (PVDF-HFP ultrafine fibers) was found, and predetermined liquid filter characteristics were obtained.

### Example 5

On the layer of ultrafine fibers of the fibrous laminate formed of two layers as obtained in Example 1, the fibrous laminate formed of three layers as obtained in Example 2 was laminated to prepare a fibrous laminate formed of five layers of a paper-making nonwoven fabric, a layer of polypropylene ultrafine fibers, a carding process through-air nonwoven fabric, a layer of polyurethane ultrafine fibers, and a conjugate spunbond nonwoven fabric.

When the resulting fibrous laminate was heat-treated by a radiation type heat treatment machine at 148°C, a low-melting point component in the thermo-fusible conjugate fibers each in each layer was melted, and the component was bonded onto an adjacent layer of layer of ultrafine fibers. The number of bonding points in an interface between the paper-making nonwoven fabric and the layer of polypropylene ultrafine fibers was 7 pieces/mm, the number of bonding points in an interface between the layer of polypropylene ultrafine fibers and the carding process through-air nonwoven fabric was 15 pieces/mm, the number of bonding points in an interface between the carding process through-air nonwoven fabric and the layer of polyurethane ultrafine fibers was 16 pieces/mm, and the number of bonding points in an interface between the layer of polyurethane ultrafine fibers and the conjugate spunbond nonwoven fabric was 20 pieces/mm, and satisfactory interface adhesion force was attained, respectively.

A flat membrane filter was prepared using the obtained fibrous laminate formed of five layers. No exposure of the ultrafine fibers was made on a surface, and therefore excellent processability was attained. Moreover, stepwise filtration by a fiber diameter gradient was attainable by setting a nonwoven fabric of polypropylene ultrafine fibers having a large fiber diameter on an upstream side, and the obtained filter had characteristics in which pressure loss was hard to increase.

### Example 6

On the fibrous laminate formed of three layers as obtained in Example 3, a net made of polypropylene was laminated thereon for the purpose of providing the laminate with rigidity, and the fibrous laminate formed of three layers as obtained in Example 4 was further laminated thereon to prepare a fibrous laminate formed of seven layers of a carding process through-air nonwoven fabric 1, a layer of PVDF-HFP ultrafine fibers, a carding process through-air nonwoven fabric 2, a net made of polypropylene, a carding process through-air nonwoven fabric 1, a layer of PVDF-HFP ultrafine fibers, and a carding process through-air nonwoven fabric 2.

The resulting fibrous laminate was heat-treated by a through-air heat treatment machine at 143°C, and in order to improve interlayer adhesion force, a pressurizing roll having a load of 7 kg was installed in a heat treatment zone outlet part of the through-air heat treatment machine, and consolidation processing was applied thereto by utilizing remaining heat of heat treatment. A low-melting point component in the thermo-fusible conjugate fibers each in each layer was melted, and bonded onto adjacent ultrafine fibers.

The number of bonding points in each interlayer in the obtained fibrous laminate formed of seven layers was 28 pieces/mm between the carding process through-air nonwoven fabric 1 and the layer of PVDF-HFP ultrafine fibers in Example 3, the number thereof was 26 pieces/mm between the layer of PVDF-HFP ultrafine fibers and the carding process through-air nonwoven fabric 2 therein, the number thereof was 27 pieces/mm between the carding process through-air nonwoven fabric 1 and the layer of PVDF-HFP ultrafine fibers in Example 4, and the number thereof was 24 pieces/mm between the layer of PVDF-HFP ultrafine fibers and the carding process through-air nonwoven fabric 2 therein, and sufficient interface adhesion force was attained, respectively. Moreover, the fibrous laminate in which uniting through lamination was caused by bonding of the thermo-fusible conjugate fibers included, in a 30 mm width at both ends of the fibrous laminate in a crosswise direction, a region in which the layers of thermo-fusible conjugate fibers were directly bonded with each other, and interlayer adhesion in the region was further stronger, and therefore no interlayer peeling was caused.

Pleating of the obtained fibrous laminate formed of seven layers was performed under conditions of a folding width of 10 mm, and the fibrous laminate caused no peeling, no defect such as rupture of the layer of PVDF-HFP ultrafine fibers is caused, pleated-shape retention was also satisfactory, and high operability and yield were attained. A pleated fibrous laminate formed of seven layers was processed into a pleated filter in such a manner that the layer of PVDF-HFP ultrafine fibers in Example 3 was placed on an upstream side of filtration. The obtained pleated filter had a larger total basis weight of the layer of ultrafine fibers, in comparison with the pleated filter prepared in Example 4, and a fiber diameter gradient was provided, thereby having high collection efficiency and an effect of suppressing an increase of pressure loss.

### Comparative Example 1

Pleating was performed by a melt-blown process under conditions of a folding width of 40 mm by using the nonwoven fabric of polypropylene ultrafine fibers obtained in Example 1. However, because rigidity of the nonwoven fabric of polypropylene ultrafine fibers was insufficient, processability was low and pleated-shape retention was also low.

When liquid filter characteristics of the obtained filter were evaluated, a pleated-shape was unmaintainable against filtration pressure, and satisfactory filter characteristics were unobtainable.

### Comparative Example 2

When a trial was made on preparing a cylindrical cartridge filter by winding, around a core material, the fibrous laminate formed of two layers of the base material nonwoven fabric and the polyurethane ultrafine fibers as obtained by performing electric field spinning of the polyurethane solution onto the base material nonwoven fabric in Example 2, processing into the filter was unattainable because the polyurethane ultrafine fibers were easily peeled from the base material nonwoven fabric, and the layer of polyurethane ultrafine fibers wound around a mirror tension roll made of metal. Accordingly, an attempt was made on processing with avoiding contact of the layer of polyurethane ultrafine fibers with the tension roll, but the layer was wound around the core material in a state in which wrinkles were developed on the fibrous laminate, and a yield was deteriorated.

### Comparative Example 3

Both sides of the nonwoven fabric of polypropylene ultrafine fibers by the melt-blown method as obtained in Example 1 were laminated with STRATECH PP being a nonwoven fabric of polypropylene ultrafine fibers having a basis weight of 30 g/m² made by Idemitsu Unitech Co., Ltd. to be processed into three layers. Accordingly, the resulting material was inserted into a calendering machine, and calendered under conditions in which temperatures of upper and lower rolls were adjusted to 145°C, a roll clearance was adjusted to 0.005 mm, contact pressure was adjusted to 0.1 MPa and velocity was adjusted to 5 m/min to obtain a fibrous laminate having three layers.

The obtained fibrous laminate formed of three layers had sufficient interlayer peeling strength, but a part significantly formed into a film was found in the fibrous laminate. In the above part, an aspect was confirmable in which not only fibers composing the polypropylene spunbond nonwoven fabric were formed into the film, but also the polypropylene ultrafine fibers were formed into the film.

Accordingly, conditions of the temperatures of the calendering rolls were changed to 130°C in such a manner that no significant part formed into the film was found in the fibrous laminate formed of three layers.

The obtained fibrous laminate was united at an allowable level, but when pleating was performed under conditions of a folding width of 10 mm, many parts in which the interlayer was peeled were observed. When liquid filter characteristics of the obtained pleated filter were confirmed, initial pressure loss was high. When a reason thereof was investigated, the fibers composing the polypropylene spunbond nonwoven fabric were subjected to compression flattening by calendering, and parts in which flattening was significant were formed into the film. Moreover, a part in the polypropylene ultrafine fibers were subjected to compression flattening and being formed into the film was partially formed into the film, and the part in which the film was formed was involved in no liquid permeation, and therefore the initial pressure loss was considered to be high.

### Comparative Example 4

A laminate formed of two layers of a polypropylene spunbond nonwoven fabric and a layer of polyurethane ultrafine fibers was prepared in a manner similar to Example 2 except that STRATECH PP being a nonwoven fabric of polypropylene ultrafine fibers having a basis weight of 30 g/m² made by Idemitsu Unitech Co., Ltd. was used as a base material nonwoven fabric. The polypropylene spunbond nonwoven fabric identical with the base material nonwoven fabric was laminated thereon in such a manner that the layer of the polyurethane ultrafine fibers served as a middle layer. Next, the resulting material was inserted into an embossing machine, and embossed under conditions in which an embossing roll temperature was adjusted to 130°C, a flat roll temperature was adjusted to 120°C, a roll clearance was adjusted to 0.005 mm, a contact pressure was adjusted to 0.1 MPa and a speed was adjusted to 10 m/min.

In the obtained fibrous laminate formed of three layers, an embossing thermally compression bonding area proportion was 8%, and the number of embossing thermally compression bonding rhombic points was 70 pieces/mm. In the embossed points, thermo-fusible conjugate fibers composing the laminated nonwoven fabric with the base material nonwoven fabric were subjected to compression flattening and thermally compressed and united with the layer of polyurethane ultrafine fibers in the middle layer, but interlayer peeling strength was at an unsatisfactory level.

Accordingly, embossing was performed under similar conditions by using an embossing machine in which an embossing compression bonding area proportion was 20% and the number of embossing thermally compression rhombic points were 150 pieces/cm². The resulting thermo-fusible conjugate fibers were subjected to compression flattening, and thermocompression bonding with the layer of polyurethane ultrafine fibers, the layer being the middle layer and united therewith, and the embossing area proportion was high. Therefore, satisfactory interlayer peeling strength was obtained.

When pleating was performed on the obtained fibrous laminates having the embossing compression bonding area proportions of 8% and 20% under conditions of a folding width of 40 mm, respectively, the fibrous laminate having the area proportion of 8% caused interlayer peeling upon pleating, and operability and a yield were deteriorated. Moreover, the fibrous laminate having the area proportion of 20% tended to slightly easily cause the interlayer peeling, but pleating was attainable at an allowable level. However, when gas filter characteristics of the obtained pleated filter were evaluated, initial pressure loss was significantly high. Investigation of a cause thereof revealed that the thermo-fusible conjugate fibers were subjected to compression flattening at the embossed points, and also the layer of polyurethane ultrafine fibers, the layer being the middle layer, was also formed into the film, no fiber shape was maintained, and the embossed points, namely 20% of the area of the fibrous laminate was involved in air permeation.

### Comparative Example 5

A carding process through-air nonwoven fabric similar to the base material nonwoven fabric in Example 2 was applied as a laminating nonwoven fabric, a polyolefin-based hot-melt adhesive (MORESCO-MELT AC-925R, made by Matsumura Oil Research Corporation) was applied thereonto in a fiber shape, and immediately a laminated nonwoven fabric having two layers of the base material nonwoven and the polyurethane ultrafine fibers obtained by electric field spinning in Example 2 was laminated in such a manner that the layer of polyurethane ultrafine fibers served as a middle layer, and the resulting material was compression-bonded by a pressure roll to prepare a fibrous laminate formed of three layers.

In the obtained laminate formed of three layers, adhesion in an interface between the layer of polyurethane ultrafine fibers on which the hot-melt resin adhesive was applied, and the laminating nonwoven fabric was sufficient, but adhesion in an interface on which no hot-melt resin adhesive was applied was unsatisfactory, and peeling was easily caused.

Accordingly, from a two-layered laminate of the base material nonwoven fabric and the layer of polyurethane ultrafine fibers obtained by electric field spinning in Example 2, the layer of polyurethane ultrafine fibers was once peeled and wound around a roll. Next, an attempt was made on preparing a three-layered fibrous laminate by applying the polyolefin-based hot-melt resin adhesive onto the base material nonwoven fabric and the laminated nonwoven fabric in the fiber shape, respectively, and immediately laminating the base material nonwoven fabric, the layer of the polyurethane ultrafine fibers and the laminating nonwoven fabric, and then compression bonding the laminated material by a pressure roll. However, when an attempt was made on paying out the wound polyurethane ultrafine fibers therefrom, a basis weight thereof was as small as 3.0 g/m² and mechanical strength thereof was low, and therefore rupture and breaking of the ultrafine fibers were easily caused. In order to improve the above, paying-out tension was adjusted, but wrinkles were developed in the layer of polyurethane ultrafine fibers on the above occasion, and a fibrous laminate formed of three layers and having satisfactory quality was unattainable.

### Comparative Example 6

In order to improve defects such as rupture, breaking and wrinkles of the polyurethane ultrafine fibers in Comparative Example 5, a basis weight of polyurethane ultrafine fibers to be prepared by electric field spinning was adjusted to 5.0 g/m² to arrange polyurethane ultrafine fibers in which mechanical strength and rigidity were improved.

The 5.0 g/m² polyurethane ultrafine fibers wound around a roll were able to be paid out therefrom without causing the defects such as rupture, breaking and wrinkles, and a fibrous laminate formed of three layers of a base material nonwoven fabric, a layer of polyurethane ultrafine fibers, and a laminating nonwoven fabric was able to be prepared with allowable operability. Each interlayer was adhered with a hot-melt resin adhesive, and had sufficient interlayer peeling strength.

Pleating was performed on the obtained fibrous laminate formed of three layers under conditions of a folding width of 40 mm to prepare a pleated filter. When gas filter characteristics thereof were evaluated, initial pressure loss was significantly high. The basis weight of the polyurethane ultrafine fibers in the fibrous laminate formed of three layers was as large as 5.0 g/m², and additionally the hot-melt resin adhesive used for adhesion in the interlayer inhibited air permeability, and the hot-melt resin adhesive was infiltrated into the layer of polyurethane ultrafine fibers, which was confirmable to reduce porosity of the layer of ultrafine fibers.

The experimental results described above were collectively shown in Table 1.

**Table 1**

| | Method of uniting | Interlayer adhesion properties | Processability | Filter characteristics |
|---|---|---|---|---|
| Example 1 | Yankee dryer | ○ | ⊚ | ⊚ |
| Example 2 | Through-air | ⊚ | ⊚ | ⊚ |
| Example 3 | Through-air | ⊚ | ⊚ | ⊚ |
| Example 4 | Through-air | ⊚ | ⊚ | ⊚ |
| Example 5 | Radiation type | ○ | ⊚ | ⊚ |
| Example 6 | Through-air and consolidation | ○ | ⊚ | ⊚ |
| Comparative Example 1 | - | - | Δ | × |
| Comparative Example 2 | - | × | × | - |
| Comparative Example 3 | Calendering at 145°C | ⊚ | - | - |
| | Calendering at 130°C | Δ | Δ | Δ |
| Comparative Example 4 | Embossing 8% | Δ | Δ | - |
| | Embossing 20% | ○ | ○ | Δ |
| Comparative Example 5 | Hot-melt one layer | Δ | Δ | - |
| | Hot-melt two layers | Δ | × | - |
| Comparative Example 6 | Hot-melt two layers | ⊚ | ⊚ | Δ |

From the results shown in Table 1, in Examples 1 to 6, the low-melting point components in the thermo-fusible conjugate fibers were bonded with the ultrafine fibers, and the fibrous laminates each having satisfactory interlayer peeling strength were obtained. The fibrous laminates had sufficient mechanical strength and rigidity, and excellent processability into a product such as a filter. Moreover, in the obtained product such as the filter, the layer of ultrafine fibers maintained original characteristics such as a diameter of the ultrafine fibers, a high specific surface area and high porosity, and physical properties of the product were obtained according to the characteristics.

On the other hand, in Comparative Example 1, satisfactory filter characteristics were unobtainable because of a single body of the nonwoven fabric of polypropylene ultrafine fibers having poor mechanical strength and rigidity. Moreover, in Comparative Example 2, satisfactory product processability was unobtainable because of the laminate formed of two layers of the base material nonwoven fabric and the ultrafine fibers in which the interlayer was insufficiently united. In Comparative Examples 3 to 6, if adhesion conditions were enhanced in order to obtain satisfactory interlayer adhesion force, the layer of ultrafine fibers was formed into a film, or the like, and damaged, and if an adhesion area and an amount of adhesive component were increased, such an increase inhibited air-permeation and liquid-permeation, and filter characteristics were reduced. Moreover, if the adhesion area and the amount of adhesive component were decreased, interlayer adhesion force was reduced and the product processability was deteriorated, and both the filter characteristics and the product processability were unable to be satisfied.

### Industrial Applicability

A fibrous laminate in which each interlayer is adhered by bonding of thermo-fusible conjugate fibers according to the invention is reinforced by at least one layer of thermo-fusible conjugate fibers. Therefore, the fibrous laminate has excellent secondary processability, and can be utilized in the form of a liquid filter for filtering and purifying water for washing precision equipment and a dispersion liquid of fine abrasive particles, a gas filter for a cleanroom and a secondary battery separator, for example, by taking advantage of characteristics such as an ultrafine fiber diameter, a high specific surface area, high porosity and fine pore diameter structure, being features of at least one layer of ultrafine fibers.

## Claims

1. A fibrous laminate, comprising a fibrous layer I composed of ultrafine fibers having a mean fiber diameter of 10 to 1,000 nanometers, and a fibrous layer II composed of thermo-fusible conjugate fibers having a mean fiber diameter of 5 to 100 micrometers, wherein contact points between the ultrafine fibers and the thermo-fusible conjugate fibers are bonded by melting of the thermo-fusible conjugate fibers composing the fibrous layer II, and the fibrous layer I and the fibrous layer II are laminated and united by the formed bonding points, the fibrous laminate being **characterized in that** the basis weight of the fibrous layer II is in the range of 15 to 60 g/m².

2. The fibrous laminate according to claim 1, wherein the ultrafine fibers are fibers spun by an electric field spinning process.

3. The fibrous laminate according to claim 1 or 2, wherein the contact points between the ultrafine fibers and the thermo-fusible conjugate fibers are bonded, and the formed bonding points are not subjected to compression flattening.

4. The fibrous laminate according to any one of claims 1 to 3, wherein the thermo-fusible conjugate fibers are composed of a high-melting point component and a low-melting point component that has a melting temperature lower than a melting temperature of the high-melting point component, and the ultrafine fibers are fibers having a melting temperature or softening temperature higher, by 10°C or more, than the melting temperature of the low-melting point component in the thermo-fusible conjugate fibers.

5. The fibrous laminate according to any one of claims 1 to 4, wherein the number of bonding points counted on the surface of a cross section of the fibrous laminate in a direction perpendicular to an interface of lamination between the fibrous layer I and the fibrous layer II is in the range of 4 to 30 pieces/mm.

6. A fibrous laminate in which a fibrous layer III composed of thermo-fusible fibers is further laminated and united with the fibrous laminate according to any one of claims 1 to 5, wherein contact points between the thermo-fusible conjugate fibers and the thermo-fusible fibers are bonded on a surface of the fibrous layer I by bonding of the thermo-fusible fibers of the fibrous layer III, and the fibrous layer I and the fibrous layer III are laminated and united by the formed bonding points.

7. A fibrous laminate in which the fibrous layer III composed of thermo-fusible fibers is further laminated and united with the fibrous laminate according to any one of claims 1 to 5, wherein the fibrous layer II and the fibrous layer III are directly joined substantially without interposing the fibrous layer I.

8. The fibrous laminate according to claim 7, wherein the fibrous layer II and the fibrous layer III are joined at both ends of the fibrous laminate in a crosswise direction.

9. A filter, wherein the fibrous laminate according to any one of claims 1 to 8 is at least partially used.

## Patentansprüche

1. Faserlaminat, umfassend eine Faserschicht I, die aus ultrafeinen Fasern mit einem mittleren Faserdurchmesser von 10 bis 1.000 Nanometern gebildet ist, und eine Faserschicht II, die aus thermisch schmelzbaren konjugierten Fasern mit einem mittleren Faserdurchmesser von 5 bis 100 Mikrometern gebildet ist, wobei Kontaktpunkte zwischen den ultrafeinen Fasern und den thermisch schmelzbaren konjugierten Fasern durch Schmelzen der thermisch schmelzbaren konjugierten Fasern, die die Faserschicht II bilden, gebunden werden, und die Faserschicht I und die Faserschicht II geschichtet sind und durch die gebildeten Bindungspunkte vereint sind, wobei das Faserlaminat **dadurch gekennzeichnet ist, dass** das Flächengewicht der Faserschicht II im Bereich von 15 bis 60 g/m² liegt.

2. Faserlaminat gemäß Anspruch 1, wobei die ultrafeinen Fasern Fasern sind, die durch ein Spinnverfahren mit elektrischem Feld gesponnen wurden.

3. Faserlaminat gemäß Anspruch 1 oder 2, wobei die Kontaktpunkte zwischen den ultrafeinen Fasern und den thermisch schmelzbaren konjugierten Fasern gebunden sind und die gebildeten Bindungspunkte keiner Druckabflachung unterworfen sind.

4. Faserlaminat gemäß irgendeinem der Ansprüche 1 bis 3, wobei die thermisch schmelzbaren konjugierten Fasern aus einer Komponente mit hohem Schmelzpunkt und einer Komponente mit niedrigem Schmelzpunkt gebildet sind, die eine Schmelztemperatur aufweist, die niedriger ist als die Schmelztemperatur der Komponente mit hohem Schmelzpunkt, und die ultrafeinen Fasern Fasern sind, die eine Schmelz- oder Erweichungstemperatur aufweisen, die um 10°C oder mehr höher ist als die Schmelztemperatur der Komponente mit niedrigem Schmelzpunkt in den thermisch schmelzbaren konjugierten Fasern.

5. Faserlaminat gemäß irgendeinem der Ansprüche 1 bis 4, wobei die Anzahl der Bindungspunkte, gezählt auf der Oberfläche eines Querschnitts des Faserlaminats in einer Richtung senkrecht zu einer Grenzfläche der Schichtung zwischen der Faserschicht I und der Faserschicht II, im Bereich von 4 bis 30 Stück/mm liegt.

6. Faserlaminat, bei dem eine Faserschicht III, die aus thermisch schmelzbaren Fasern gebildet ist, weiter geschichtet ist und mit dem Faserlaminat gemäß irgendeinem der Ansprüche 1 bis 5 verbunden ist, wobei Kontaktpunkte zwischen den thermisch schmelzbaren konjugierten Fasern und den thermisch schmelzbaren Fasern auf einer Oberfläche der Faserschicht I durch Verbinden der thermisch schmelzbaren Fasern der Faserschicht III gebunden sind und die Faserschicht I und die Faserschicht III geschichtet sind und durch die gebildeten Verbindungspunkte vereint sind.

7. Faserlaminat, bei dem die Faserschicht III, die aus thermisch schmelzbaren Fasern gebildet ist, weiter geschichtet und vereint ist mit dem Faserlaminat gemäß irgendeinem der Ansprüche 1 bis 5, wobei die Faserschicht II und die Faserschicht III im Wesentlichen ohne Zwischenlegen der Faserschicht I direkt zusammengefügt sind.

8. Faserlaminat gemäß Anspruch 7, wobei die Faserschicht II und die Faserschicht III an beiden Enden des Faserlaminats in einer Querrichtung zusammengefügt sind.

9. Filter, wobei das Faserlaminat gemäß irgendeinem der Ansprüche 1 bis 8 zumindest teilweise verwendet wird.

## Revendications

1. Laminé fibreux, comprenant une couche fibreuse I composée de fibres ultrafines ayant un diamètre moyen de fibres de 10 à 1000 nanomètres, et une couche fibreuse II composée de fibres conjuguées thermofusibles ayant un diamètre de fibres moyen de 5 à 100 micromètres, les points de contact entre les fibres ultrafines et les fibres conjuguées thermofusibles étant liés par fusion des fibres conjuguées thermofusibles composant la couche fibreuse II, et la couche fibreuse I et la couche fibreuse II étant laminées et unies par les points de liaison formés, le laminé fibreux étend **caractérisé en ce que** le poids de base de la couche fibreuse II est de l'ordre de 15 à 60 g/m².

2. Laminé fibreux selon la revendication 1, dans lequel les fibres ultrafines sont des fibres filées par un processus de filage à champ électrique.

3. Laminé fibreux selon la revendication 1 ou 2, dans lequel les points de contact entre les fibres ultrafines et les fibres conjuguées thermofusibles sont liés, et les points de liaisons formés ne sont pas soumis à un aplatissement par compression.

4. Laminé fibreux selon l'une quelconque des revendications 1 à 3, dans lequel les fibres conjuguées thermofusibles sont composées d'un composant à point de fusion élevé et d'un composant à point de fusion bas qui a une température de fusion inférieure à une température de fusion du composant à point de fusion élevé, et les fibres ultrafines sont des fibres ayant une température de fusion ou une température de ramollissement supérieure de 10 °C ou plus à la température de fusion du composant à point de fusion bas dans les fibres conjuguées thermofusibles.

5. Laminé fibreux selon l'une quelconque des revendications 1 à 4, dans lequel le nombre de points de liaison comptés sur la surface d'une section transversale du laminé fibreux dans un sens perpendiculaire à une interface de laminage entre la couche fibreuse I et la couche fibreuse II est de l'ordre de 4 à 30 pièces/mm.

6. Laminé fibreux dans lequel une couche fibreuse III composée de fibres thermofusibles est en outre laminée et unie avec le laminé fibreux selon l'une quelconque des revendications 1 à 5, les points de contact entre les fibres conjuguées thermofusibles et les fibres thermofusibles étant liés sur une surface de la couche fibreuse I par liaison des fibres thermofusibles de la couche fibreuse III, et la couche fibreuse I et la couche fibreuse III étant laminées et unies par les points de liaison formés.

7. Laminé fibreux dans lequel la couche fibreuse III composée de fibres thermofusibles est en outre laminée et unie avec le laminé fibreux selon l'une quelconque des revendications 1 à 5, la couche fibreuse II et la couche fibreuse III étant assemblées directement substantiellement sans interposition de la couche fibreuse I.

8. Laminé fibreux selon la revendication 1, dans lequel la couche fibreuse II et la couche fibreuse III sont assemblées aux deux extrémités du laminé fibreux dans un sens transversal.

9. Filtre, dans lequel le laminé fibreux selon l'une quelconque des revendications 1 à 8 est au moins partiellement utilisé.
